# EUROPÄISCHE PATENTSCHRIFT

(11) **EP 3 852 677 B1**
(45) Veröffentlichungstag und Bekanntmachung des Hinweises auf die Patenterteilung: **03.04.2024**
(21) Anmeldenummer: 19758647.2
(22) Anmeldetag: 15.08.2019
(51) Int. Cl.: A61C 13/08, A61C 13/00

(54) **VORPRODUKT ZUR HERSTELLUNG VON PROTHESENZÄHNEN UND VERFAHREN ZU DESSEN HERSTELLUNG UND VERARBEITUNG**
PRELIMINARY PRODUCT FOR PRODUCING PROSTHETIC TEETH, AND METHOD FOR PRODUCING AND PROCESSING SAID PRELIMINARY PRODUCT
DEMI-PRODUIT POUR LA FABRICATION DE DENTS PROTHÉTIQUES ET PROCÉDÉ POUR SA FABRICATION ET SON TRAITEMENT

(30) Priorität: 21.09.2018 DE 102018123318
(43) Veröffentlichungstag der Anmeldung: 28.07.2021
(73) Patentinhaber: Kulzer GmbH, 63450 Hanau (DE)
(72) Erfinder: DIEZ, Lars Hendrik, 63456 Hanau (DE); DEKERT, Stephan, 61273 Wehrheim/Obernhain (DE); RITZEL, Roger, 63599 Biebergemünd (DE)
(74) Vertreter: Schultheiss & Sterzel Patentanwälte PartG mbB
(86) Internationale Anmeldenummer: PCT/EP2019/071922
(87) Internationale Veröffentlichungsnummer: WO 2020/057872

(56) Entgegenhaltungen:
- EP-A1- 3 181 090
- US-A- 2 345 305
- US-A- 2 554 845
- US-A- 4 721 466

## Beschreibung

Die Erfindung betrifft ein Vorprodukt zur Herstellung von Prothesenzähnen für eine Dentalprothese. Die Erfindung betrifft auch ein Verfahren zum Herstellen eines solchen Vorprodukts und ein Verfahren zur Herstellung einer Dentalprothese mit einem CAM-Verfahren.

Neben handwerklichen Techniken gewinnen digitale Fertigungsmethoden auch im Dentalbereich immer mehr an Bedeutung. Zahnersatz und andere Dentalformteile, wie zum Beispiel Kronen, Brücken, Prothesenbasen zur Herstellung von Dentalprothesen, Prothesenzähne und 3-dimensionale Modelle des Mundraums eines Patienten, werden seit einigen Jahren mittels CAD/CAM-Technologien subtraktiv in Fräsverfahren hergestellt oder bearbeitet (CAM - Computer-Aided Manufacturing, Deutsch: rechnerunterstützte Fertigung, CAD - Computer-Aided Design, Deutsch: rechnerunterstützte Konstruktion).

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Es gibt Verfahren, wie beispielsweise die aus der DE 10 2009 056 752 A1 oder der WO 2013 124 452 A1 bekannten Verfahren, bei denen eine dentale Teil- beziehungsweise Totalprothese digital aufgestellt und über CAD/CAM-Verfahren produziert wird. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert. Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen.

Die US 2 554 845 A und die US 2 345 305 A offenbaren einen Guss mit mehreren Prothesenzähnen, die über eine Strebe auf der basalen Seite der Prothesenzähne mit einem Anguss verbunden sind. Aus der US 4 721 466 A ist eine Schiene mit Zapfen und auf die Zapfen gesteckten beweglichen Prothesenzähnen bekannt. Die EP 3 181 090 A1 offenbart ein Verfahren zur Herstellung von Kronen und Brücken aus einem Block mit einem CAM-Verfahren, ohne dass bei der Herstellung aus dem Block Halterungen entstehen.

Bei der Herstellung von herausnehmbarem Zahnersatz, wie dentalen Voll- und Teilprothesen, die mit Hilfe digitaler Daten mit einer CAD-Konstruktion gefertigt wurden, gibt es technische Lösungsansätze, die Daten der Prothesenbasis und der Zähne zu separieren. Die Prothesenbasis kann dabei durch ein generatives oder auch subtraktives Fertigungsverfahren hergestellt werden. Als Prothesenzähne kommen vorkonfektionierte Kunststoffzähne oder auch individuell hergestellte Prothesenzähne oder Zahnbögen aus den gleichen Ausgangsmaterialien in Frage. In jedem Fall müssen an der Prothesenbasis Zahnfächer zur Aufnahme dieser Prothesenzähne vorgesehen sein, in welche dann in einem nachgeschalteten manuellen Fertigungsschritt, die Prothesenzähne oder die Zahnbögen, zum Beispiel durch Kleben, befestigt werden.

Aus der EP 2 571 451 B1 und der EP 2 666 438 A2 sind Verfahren hierfür bekannt, bei denen vorkonfektionierte Prothesenzähne in einer Halterung in Wachs eingebettet werden und anschließend basal mittels CAM-Verfahren abgefräst werden. Die so gekürzten Prothesenzähne werden von dem Wachs befreit und anschließend in eine Prothesenbasis eingesetzt und dort eingeklebt, um eine Dentalprothese herzustellen. Hieran ist nachteilig, dass die Prothesenzähne von den Wachsresten befreit und gereinigt werden müssen, bevor sie in die Prothesenbasis eingesetzt werden können. Es ist notwendig, die Prothesenzähne basal zu kürzen, um die Zahnhöhe an den Kiefer des Patienten anzupassen, also um die Bisshöhe der Dentalprothese passend zu den Bedürfnissen des Patienten einzustellen.

Aus der CH 701 436 A2 ist ein Zahnersatz bekannt, bei dem ein Prothesenzahn als eine Brückenkonstruktion mit einer Schiene an den Nachbarzähnen befestigt wird. Hierzu ist in dem Prothesenzahn eine Durchführung vorgesehen. Derartige Prothesenzähne sind nicht zum Einsetzen in Prothesenbasen vorgesehen und daher nicht zur Herstellung von Dentalprothesen geeignet, da die Durchführung durch den Prothesenzahn in einer Dentalprothese nachteilig wäre. Die US 4 721 466 A offenbart einen Satz Prothesenzähne, die über eine keulenförmige Halterung an einer deformierbaren Stange befestigt sind. Dieser Aufbau ist aufgrund einer fehlenden stabilen Halterung der Prothesenzähne nicht zur Verwendung in einer subtraktiven CAM-Vorrichtung geeignet, da die Prothesenzähne unter Einwirkung einer Kraft beim Fräsen oder Bearbeiten der Prothesenzähne ihre Position verändern würden und dadurch keine exakte Bearbeitung mehr möglich wäre. Mit der WO 2017/005 905 A1 wird vorgeschlagen, einen Satz Prothesenzähne, die in einer Schrumpffolie fixiert sind, zu bearbeiten. Dabei muss die Schrumpffolie mit der CAM-Vorrichtung in den Bereichen entfernt werden, an denen die Prothesenzähne bearbeitet werden sollen. Hierbei kann sich bei großflächiger Bearbeitung der Prothesenzähne die Schrumpffolie lockern und die Prothesenzähne in ihrer Position und Orientierung beweglich machen, so dass eine exakte Bearbeitung der Prothesenzähne erschwert oder sogar unmöglich wird.

Die Aufgabe der Erfindung besteht also darin, die Nachteile des Stands der Technik zu überwinden. Insbesondere soll ein Vorprodukt und ein Verfahren entwickelt werden, mit dem Prothesenzähne in einer CAM-Vorrichtung präzise und in reproduzierbarer Qualität zur Herstellung einer Dentalprothese bearbeitet werden können, ohne dass Reste eines Wachses oder eines anderen Fixierungsmittels nachträglich durch eine Reinigung entfernt werden müssen. Mit dem Vorprodukt und dem Verfahren soll eine schnelle und kostengünstige Fertigung einer Dentalprothese ermöglicht werden. Das Vorprodukt soll dabei kostengünstig in der Herstellung und während der Verarbeitung bei der Herstellung von Dentalprothesen sein. Eine Nachbearbeitung der mit dem Vorprodukt gefertigten basal gekürzten Prothesenzähne soll möglichst einfach sein.

Die Aufgaben der Erfindung werden gelöst durch ein Vorprodukt zur Herstellung von Prothesenzähnen einer Dentalprothese, wobei das Vorprodukt aus einem Kunststoff besteht und das Vorprodukt aufweisend eine Mehrzahl vorkonfektionierter Prothesenzähne und eine Haltegeometrie, die vorkonfektionierten Prothesenzähne aufweisend eine vorgeformte koronale Oberfläche und eine vorgeformte Mantelfläche, die an die koronale Oberfläche angrenzt, die Haltegeometrie aufweisend zumindest eine Strebe, wobei die zumindest eine Strebe mit zumindest einem der vorkonfektionierten Prothesenzähne einteilig ausgeführt ist, wobei die vorkonfektionierten Prothesenzähne mit der Haltegeometrie in einer Halterung einer CAM-Vorrichtung derart positionsfest fixierbar sind, dass die vorkonfektionierten Prothesenzähne mit der CAM-Vorrichtung mechanisch bearbeitbar sind, wobei die zumindest eine Strebe der Haltegeometrie an der koronalen Oberfläche oder der Mantelfläche oder der koronalen Oberfläche und der Mantelfläche zumindest eines Prothesenzahns der vorkonfektionierten Prothesenzähne mit den Prothesenzähnen verbunden ist und wobei keine der zumindest einen Strebe der Haltegeometrie auf einer basalen Oberfläche des zumindest einen Prothesenzahns der vorkonfektionierten Prothesenzähne angeordnet ist.

Die Mantelfläche eines Prothesenzahns ist die Oberfläche die den Prothesenzahn seitlich, also mesial, distal, approximal, vestibulär und lingual umgibt. Wenn ein Prothesenzahn als ein in erster Näherung kreiszylindrisches geometrisches Objekt angesehen wird, dessen Zylinderachse von der Zahnwurzel bis zur Zahnkrone, also von apikal nach koronal verläuft, dann ist die koronale Oberfläche eine der Grundflächen des zylindrischen Prothesenzahns und die Mantelfläche dementsprechend die die Grundflächen begrenzende Zylindermantelfläche.

Eine einteilige Ausführung der zumindest einen Strebe mit zumindest einem Prothesenzahn der vorkonfektionierten Prothesenzähne bedeutet, dass die zumindest eine Strebe und der zumindest eine Prothesenzahn der vorkonfektionierten Prothesenzähne aus einem zusammenhängenden Werkstoff gefertigt sind, insbesondere aus einem homogenen zusammenhängenden Werkstoff gefertigt sind. Verbindungselemente zwischen der zumindest einen Strebe und dem zumindest einen Prothesenzahn der vorkonfektionierten Prothesenzähne sind dann nicht vorhanden.

Die zumindest eine Strebe hat erfindungsgemäß bevorzugt die Form eines allgemeinen Zylinders oder ist als Filmanguss ausgeführt. Ein allgemeiner Zylinder ist ein Zylinder mit kreisförmiger aber auch mit nicht kreisförmiger Grundfläche. Dabei werden eckige Querschnitte der zumindest einen Strebe bevorzugt, wenn einzelne Prothesenzähne mit einer Haltegeometrie versehen sind, da durch die kantige Form der zumindest einen Strebe ein Verdrehschutz realisiert wird, wenn die zumindest eine Strebe direkt zur Halterung und Fixierung der vorkonfektionierten Prothesenzähne verwendet wird. Ein Filmanguss hat eine linear gestreckte Verbindung zu dem zumindest einen Prothesenzahn der vorkonfektionierten Prothesenzähne und kann flach und quaderförmig ausgebildet sein.

Bei dem Vorprodukt ist vorgesehen, dass das Vorprodukt aus einem Kunststoff besteht.

Kunststoffe eignen sich zur Herstellung von Prothesenzähnen. Zudem lassen sich Kunststoffe gut mit automatisierten CAM-Verfahren bearbeiten. Ferner lässt sich das Vorprodukt, also die vorkonfektionierten Prothesenzähne mit der Haltegeometrie, einfach und kostengünstig einteilig aus Kunststoff herstellen.

Dabei kann vorgesehen sein, dass das Vorprodukt aus einem zahnfarbenem Kunststoff mit einer Shore-Härte (SHORE Härte D) von wenigstens 50 besteht, bevorzugt von wenigstens 70 besteht.

Die Shore-Härte wird dabei nach VDI/VDE 2616 (VDI/VDE 2616 Blatt 2 (2014-07): Härteprüfung an Kunststoffen und Elastomeren) und nach den Vorgaben in der Norm DIN 53505 (2000) ermittelt.

Eine Shore-Härte (SHORE Härte D) von wenigstens 50, insbesondere 70, des Kunststoffs wird bevorzugt, weil dieser dann hart genug für den Einsatz als Material für Prothesenzähne ist.

Des Weiteren kann vorgesehen sein, dass jeder Prothesenzahn der vorkonfektionierten Prothesenzähne mit einer Strebe oder mit zwei Streben oder mit drei Streben als die zumindest eine Strebe einteilig verbunden ausgeführt ist.

Hierdurch wird sichergestellt, dass alle Prothesenzähne der vorkonfektionierten Prothesenzähne von der Haltegeometrie stabil gehalten werden, so dass die vorkonfektionierten Prothesenzähne während der Bearbeitung mit einer CAM-Vorrichtung, wie einer computergesteuerten CAM-Fräse in einer definierten Position und Lage gehalten werden kann.

Es ist auch vorgesehen, dass die zumindest eine Strebe der Haltegeometrie an der koronalen Oberfläche oder der Mantelfläche oder der koronalen Oberfläche und der Mantelfläche zumindest eines Prothesenzahns der vorkonfektionierten Prothesenzähne mit dem zumindest einen Prothesenzahn der vorkonfektionierten Prothesenzähne verbunden ist.

Da die zumindest eine Strebe die vorkonfektionierten Prothesenzähne während der Bearbeitung halten soll und eine basale Bearbeitung vorteilhaft ist, weil die sichtbaren Oberflächen des zumindest einen Prothesenzahns der vorkonfektionierten Prothesenzähne dann weniger stark bearbeitet werden müssen und die korrekte Bisshöhe exakt eingestellt werden muss, ist es sinnvoll und vorgesehen, die zumindest eine Strebe nicht auf der basalen Seite anzuordnen.

Ferner kann vorgesehen sein, dass die zumindest eine Strebe der Haltegeometrie an der koronalen Oberfläche oder einer lingualen Oberfläche oder einer approximalen Oberfläche oder einer vestibulären Oberfläche oder der koronalen Oberfläche und/oder der lingualen Oberfläche und/oder einer distalen Oberfläche und/oder einer mesialen Oberfläche und/oder der vestibulären Oberfläche des zumindest einen Prothesenzahns der vorkonfektionierten Prothesenzähne mit dem zumindest einen Prothesenzahn der vorkonfektionierten Prothesenzähne verbunden ist.

An diesen Haltepunkten kann der zumindest eine Prothesenzahn der vorkonfektionierten Prothesenzähne beziehungsweise die vorkonfektionierten Prothesenzähne stabil gehalten werden. Gleichzeitig kann die Verbindung an diesen Stellen gut und bezüglich des ästhetischen Erscheinungsbilds unauffällig entfernt werden.

Es kann bei bevorzugten erfindungsgemäßen Vorprodukten auch vorgesehen sein, dass die Haltegeometrie einen Rahmen aufweist, der den zumindest einen Prothesenzahn der vorkonfektionierten Prothesenzähne oder die vorkonfektionierten Prothesenzähne zumindest bereichsweise umfasst, wobei der Rahmen über die zumindest eine Strebe mit dem zumindest einen Prothesenzahn der vorkonfektionierten Prothesenzähne verbunden ist, wobei vorzugsweise der Rahmen einteilig mit der zumindest einen Strebe und dem zumindest einen Prothesenzahn der vorkonfektionierten Prothesenzähne ausgeführt ist.

Mit dem Rahmen ist eine standardisierte und stabile Halterung der vorkonfektionierten Prothesenzähne in einer CAM-Vorrichtung möglich.

Dabei kann vorgesehen sein, dass der Rahmen jeden einzelnen Prothesenzahn der vorkonfektionierten Prothesenzähne umgibt oder umschließt.

Hierdurch wird jeder Prothesenzahn der vorkonfektionierten Prothesenzähne stabil gehalten. Auf diese Weise kann die zumindest eine Strebe mit einem kleineren Querschnitt ausgeführt werden, ohne dass dadurch die stabile Lagerung der vorkonfektionierten Prothesenzähne beeinträchtigt wird.

Bevorzugt kann bei erfindungsgemäßen Vorprodukten mit Rahmen vorgesehen sein, dass der Rahmen die Mantelfläche jedes einzelnen Prothesenzahns der vorkonfektionierten Prothesenzähne umgibt oder umschließt.

Wenn der Rahmen die Mantelfläche jedes einzelnen Prothesenzahns der vorkonfektionierten Prothesenzähne umgibt oder umschließt, sind die basalen Oberflächen der vorkonfektionierten Prothesenzähne bei einer Bearbeitung gut zugänglich. Dies vereinfacht die nachfolgende Bearbeitung. Zu dem gleichen Zweck sind bevorzugt alle Prothesenzähne der vorkonfektionierten Prothesenzähne alle gleich ausgerichtet, so dass basale Oberflächen aller Prothesenzähne von der gleichen Seite des Vorprodukts aus zugänglich sind.

Es wird mit der Erfindung vorgeschlagen, dass das Vorprodukt eine Mehrzahl von Prothesenzähnen aufweist.

Dadurch ergibt sich die Möglichkeit, mehrere Prothesenzähne in einem einzigen Arbeitsschritt mit einer CAM-Vorrichtung zu bearbeiten. Bevorzugt kann ein ganzer Satz von vorkonfektionierten Prothesenzähnen, beispielsweise eines Quadranten oder eines Teils eines Quadranten oder eines vollständigen Gebisses, mit dem Vorprodukt vorgeformt sein, so dass alle Prothesenzähne eines Teilgebisses oder eines vollständigen Gebisses oder eines zusammenhängenden Teils eines Gebisses in einem einzigen Arbeitsschritt mit der CAM-Vorrichtung bearbeitet werden können.

Dabei kann vorgesehen sein, dass die vorkonfektionierten Prothesenzähne über die zumindest eine Strebe miteinander verbunden sind oder die vorkonfektionierten Prothesenzähne über die zumindest eine Strebe und einen Rahmen miteinander verbunden sind.

Hierdurch werden keine zusätzlichen Haltemittel benötigt, so dass die über die zumindest eine Strebe miteinander verbundenen Prothesenzähne sich gegenseitig halten.

Es kann auch vorgesehen sein, dass alle Prothesenzähne der vorkonfektionierten Prothesenzähne gleich ausgerichtet sind, wobei basale Oberflächen aller Prothesenzähne von einer Seite des Vorprodukts aus zugänglich sind.

Hiermit wird erreicht, dass alle Prothesenzähne bequem von der gleichen Seite des Vorprodukts aus basal bearbeitet werden können.

Gemäß einer Weiterbildung der vorliegenden Erfindung kann vorgesehen sein, dass das Vorprodukt durch Ausgießen oder Ausspritzen einer Gussform mit einem Kunststoff hergestellt ist, wobei vorzugsweise wenigstens eine der zumindest einen Strebe durch einen Kanal, insbesondere einen Angusskanal, geformt ist.

Dieses Herstellungsverfahren ist einfach und kostengünstig zu realisieren. Ferner kann hierdurch die zumindest eine Strebe gleichzeitig als Angusskanal verwendet werden, so dass auf zusätzliche Angusskanäle verzichtet werden kann. Dadurch ist die Herstellung des Vorprodukts vereinfacht und kostengünstig. Bevorzugt ist die Gussform eine Spritzgussform.

Des Weiteren kann vorgesehen sein, dass die zumindest eine Strebe einen Querschnitt von wenigstens 1 mm hat, bevorzugt einen Querschnitt zwischen 1 mm und 3 mm hat.

Mit diesen Querschnitten ist eine stabile Halterung der vorkonfektionierten Prothesenzähne möglich, gleichzeitig sind die Kontaktflächen zwischen der zumindest einen Strebe und dem zumindest einen Prothesenzahn aber möglichst klein, um die notwendige Nachbearbeitung der vorkonfektionierten Prothesenzähne möglichst gering zu halten. Unter dem Querschnitt der zumindest einen Strebe ist die mittlere Länge der Geraden zu verstehen, die in eine Querschnittsfläche senkrecht zu der zumindest einen Strebe gelegt werden können, wobei die Geraden die Ränder der Querschnittsfläche miteinander verbinden und durch den Schwerpunkt (beziehungsweise den Mittelpunkt) der Querschnittsfläche verlaufen.

Die der vorliegenden Erfindung zugrundeliegenden Aufgaben werden auch gelöst durch ein Verfahren zum Herstellen eines erfindungsgemäßen Vorprodukts, gekennzeichnet durch die Schritte:
1) Bereitstellen einer Gussform zum Formen des Vorprodukts, wobei die Gussform Prothesenzahnformen als Negativformen zum Formen der vorkonfektionierten Prothesenzähne aufweist und wobei die Gussform zumindest einen Kanal zum Angießen der Prothesenzahnformen aufweist;
2) Einspritzen oder Einpressen eines flüssigen Kunststoffs in die Gussform, wobei der Kunststoff durch den zumindest einen Kanal hindurch in die Prothesenzahnformen fließt, wobei der zumindest eine Kanal die zumindest eine Strebe formt;
3) Aushärten des Kunststoffs in der Gussform; und
4) Entformen des ausgehärteten Kunststoffs.

Als Gussform wird vorzugsweise eine Spritzgussform zum Spritzgießen des Vorprodukts verwendet.

Dabei kann vorgesehen sein, dass die Prothesenzahnformen durch jeweils wenigstens einen des zumindest einen Kanals miteinander verbunden sind oder die Prothesenzahnformen über jeweils wenigstens einen des zumindest einen Kanals und über eine Rahmenform der Gussform miteinander verbunden sind, wobei die Rahmenform zum Formen einer Rahmens eines Vorprodukts mit einem Rahmen geeignet ist.

Hierdurch wird mit dem Verfahren gleich ein ganzer Satz von Prothesenzähnen mit dem Vorprodukt hergestellt, so dass die vorkonfektionierten Prothesenzähne in einem nachfolgenden Schritt gemeinsam bearbeitet werden können. Zudem sind die vorkonfektionierten Prothesenzähne alle stabil miteinander verbunden und so während der Bearbeitung stabil zu halten.

Ferner kann vorgesehen sein, dass die Gussform aus zwei oder mehr Teilen zusammengesetzt wird, wobei jeder des zumindest einen Kanals durch zwei Teile der Gussform geformt wird.

Hiermit kann wird das Entformen des Vorprodukts vereinfacht.

Die der vorliegenden Erfindung zugrundeliegenden Aufgaben werden auch gelöst durch ein Verfahren zur Herstellung einer Dentalprothese mit einem CAM-Verfahren, aufweisend die Schritte:
A) Bereitstellen eines erfindungsgemäßen Vorprodukts zur Herstellung von Prothesenzähnen einer Dentalprothese, das Vorprodukt aufweisend eine Mehrzahl vorkonfektionierter Prothesenzähne und eine Haltegeometrie, die vorkonfektionierten Prothesenzähne aufweisend eine vorgeformte koronale Oberfläche und eine vorgeformte Mantelfläche, die an die koronale Oberfläche angrenzt, die Haltegeometrie aufweisend zumindest eine Strebe, wobei die zumindest eine Strebe mit zumindest einem der vorkonfektionierten Prothesenzähne einteilig ausgeführt ist, wobei die vorkonfektionierten Prothesenzähne mit der Haltegeometrie in einer Halterung einer CAM-Vorrichtung derart positionsfest fixierbar sind, dass die vorkonfektionierten Prothesenzähne mit der CAM-Vorrichtung mechanisch bearbeitbar sind oder Herstellen eines Vorprodukts mit einem erfindungsgemäßen Herstellungs-Verfahren zum Herstellen eines solchen Vorprodukts mit den Schritten 1) Bereitstellen einer Gussform zum Formen des Vorprodukts, wobei die Gussform Prothesenzahnformen als Negativformen zum Formen der vorkonfektionierten Prothesenzähne aufweist und wobei die Gussform zumindest einen Kanal zum Angießen der Prothesenzahnformen aufweist; 2) Einspritzen oder Einpressen eines flüssigen Kunststoffs in die Gussform, wobei der Kunststoff durch den zumindest einen Kanal hindurch in die Prothesenzahnformen fließt, wobei der zumindest eine Kanal die zumindest eine Strebe formt; 3) Aushärten des Kunststoffs in der Gussform; und 4) Entformen des ausgehärteten Kunststoffs;
B) Fixieren des Vorprodukts in einer CAM-Vorrichtung;
C) anschließendes subtraktives Bearbeiten, insbesondere Kürzen zumindest eines Prothesenzahns der vorkonfektionierten Prothesenzähne mit der CAM-Vorrichtung nach Maßgabe eines individuellen virtuellen Modells;
D) Trennen des zumindest einen bearbeiteten Prothesenzahns von der Haltegeometrie durch Auftrennen oder Brechen der zumindest einen Strebe, insbesondere an einer Oberfläche des zumindest einen bearbeiteten Prothesenzahns; und
E) Einsetzen und Verbinden des zumindest einen bearbeiteten Prothesenzahns mit einer Prothesenbasis zur Herstellung der Dentalprothese.

Mit diesem Verfahren werden die durch das Vorprodukt erzielten Vorteile auf die herzustellende Dentalprothese übertragen. Das individuelle virtuelle Modell kann sehr einfach gehalten sein und beispielsweise im Wesentlichen nur die Zahnhöhe aller Prothesenzähne für die Dentalprothese umfassen. Das individuelle virtuelle Modell kann aber auch die gesamte äußere Form der Prothesenzähne der Dentalprothese und gegebenenfalls auch der Prothesenbasis umfassen.

Dabei kann vorgesehen sein, dass der zumindest eine Prothesenzahn der vorkonfektionierten Prothesenzähne in Schritt C) nach Maßgabe des individuellen virtuellen Modells basal gekürzt wird.

Hiermit wird die Bisshöhe der Dentalprothese eingestellt, ohne dass die okklusale Oberfläche der vorkonfektionierten Prothesenzähne gekürzt werden muss, so dass das ästhetische Aussehen und die Funktion der Zahnhöcker des zumindest einen vorkonfektionierten Prothesenzahns der vorkonfektionierten Prothesenzähne nicht beeinträchtigt wird.

Ferner kann vorgesehen sein, dass in Schritt D) ein Rahmen des Vorprodukts und/oder Teile der zumindest einen Strebe mit der CAM-Vorrichtung verbunden bleibt, während der zumindest eine bearbeitete Prothesenzahn gelöst wird oder die bearbeiteten und unbearbeiteten Prothesenzähne gelöst werden.

Hierdurch wird klargestellt, dass nicht die vorkonfektionierten Prothesenzähne selbst in der CAM-Vorrichtung eingespannt werden, sondern diese über die zumindest eine Strebe beziehungsweise über die Haltegeometrie in der CAM-Vorrichtung fixiert werden.

Des Weiteren kann vorgesehen sein, dass nach Schritt C) die Haltegeometrie, insbesondere die zumindest eine Strebe, angefräst werden, so dass eine Sollbruchstelle entsteht, wobei die Sollbruchstelle in Schritt D), der nach Schritt C) erfolgt, zum Trennen des zumindest einen bearbeiteten Prothesenzahns von der Haltegeometrie oder der bearbeiteten und unbearbeiteten Prothesenzähne von der Haltegeometrie benutzt wird.

Hierdurch können die bearbeiteten Prothesenzähne zusammen mit der Haltegeometrie aus der CAM-Vorrichtung entnommen werden und die bearbeiteten Prothesenzähne durch Herausbrechen oder Auftrennen der Sollbruchstellen von der Haltegeometrie getrennt werden.

Schließlich kann vorgesehen sein, dass der zumindest eine mit der Haltegeometrie noch verbundene bearbeitete Prothesenzahn nach Schritt C) in die Prothesenbasis eingesetzt und mit der Prothesenbasis verbunden wird, bevor der zumindest eine bearbeitete Prothesenzahn von der Haltegeometrie getrennt wird oder die bearbeiteten und unbearbeiteten Prothesenzähne von der Haltegeometrie getrennt werden, so dass Schritt E) nach Schritt C) erfolgt und Schritt D) nach Schritt E) erfolgt.

Hierdurch kann die Haltegeometrie zusätzlich zur korrekten Positionierung des zumindest einen bearbeiteten Prothesenzahns beim Verbinden mit der Prothesenbasis genutzt werden. Hierzu ist es sinnvoll, wenn das Vorprodukt nach Maßgabe eines individuell an den jeweiligen Patienten angepassten Modells, bevorzugt eines CAD-Modells, individuell gefertigt wird, wenn mehr als nur ein Prothesenzahn in dem Vorprodukt vorhanden ist, da die Position und Lage der Prothesenzähne zueinander besser individuell gestaltet werden. Hierzu können gegebenenfalls die Daten beziehungsweise die dreidimensionalen Formen verwendet werden, die zur Herstellung der zu fertigenden Dentalprothese genutzt werden.

Der Erfindung liegt die überraschende Erkenntnis zugrunde, dass es durch die Verwendung von Streben als Haltegeometrie oder als Teil einer Haltegeometrie von vorkonfektionierten Prothesenzähnen gelingt, ein einteiliges Vorprodukt bereitzustellen, das mit einem subtraktiven CAM-Verfahren, insbesondere einem spanabhebenden CAM-Verfahren, ohne weiteres bearbeitet werden kann, ohne dass anschließend eine aufwendige Reinigung der bearbeiteten Prothesenzähne notwendig ist. Das Vorprodukt und das Verfahren sind dabei bei vergleichbarem Nutzen einfacher und kostengünstiger in der Herstellung und Bearbeitung als bekannte Vorprodukte. Die bei subtraktiven CAM-Verfahren genutzten Werkzeuge, insbesondere Fräsen, lassen sich dabei unmittelbar und mit dem gleichen Arbeitsschritt zum Trennen der zumindest einen Strebe von dem zumindest einen bearbeiteten Prothesenzahn nutzen. Eine aufwendige Nachbearbeitung ist nicht notwendig. Allenfalls sollte die Stelle, an der die letzte der zumindest einen Strebe mit dem jeweiligen Prothesenzahn verbunden war, kurz poliert oder nachbearbeitet werden. Das Vorprodukt kann somit zu einer einfachen, schnellen und kostengünstigen Herstellung von an die Behandlungssituation angepassten Prothesenzähnen verwendet werden, insbesondere bezüglich der Bisshöhe passend basal gekürzten Prothesenzähnen verwendet werden. Das Vorprodukt und das Verfahren sind dabei auch hervorragend zum Kürzen beziehungsweise Bearbeiten und Herstellen mehrerer Prothesenzähne für eine individuelle Dentalprothese geeignet.

Die vorliegende Erfindung betrifft das Herstellen einer Haltegeometrie an Prothesenzähnen aus Kunststoff durch anspritzen/pressen der Haltegeometrie, während des Fertigungsprozesses, zum anschließenden Einspannen der Prothesenzähne zur Bearbeitung der Prothesenzähne durch ein subtraktives Fertigungsverfahren. Die Erfindung betrifft eine oder mehre angespritzte Streben (als Stege in Form von "Haltepins") als Haltegeometrie, die beim Spritzgießprozess oder Pressprozess zusammen mit den Prothesenzähnen gefertigt werden.

Das erfindungsgemäße Vorprodukt und die erfindungsgemäßen Verfahren erlauben ein einfaches und sicheres Einspannen der Prothesenzähne mit dem Vorprodukt. Andere aktuelle Lösungen sind dagegen sehr aufwendig oder eher ungenau. Es entstehen bei der Fertigung des Vorprodukts keine Zusatzkosten, wenn die Haltegeometrie von Anfang bei der Konstruktion von neuen Zahnformen berücksichtigt wird.

Das erfindungsgemäße Vorprodukt ermöglicht ein genaueres Einspannen der vorkonfektionierten Prothesenzähne. Das erfindungsgemäße Vorprodukt und das erfindungsgemäße Verfahren zur Herstellung einer Dentalprothese ermöglicht eine einfache Handhabung und Umsetzung, so dass eine zentrale aber auch eine dezentrale Fertigung möglich ist, wobei weniger Arbeitsschritte als bei bekannten Verfahren notwendig sind. Es ergibt sich keine Kontamination der gekürzten Prothesenzähne mit Wachs, da die Prothesenzähne nicht mehr in Rähmchen eingegossen werden müssen. Hieraus ergibt sich eine Prozessstabilisierung, da keine Wachsreste den Haftverbund zwischen den vorkonfektionierten Prothesenzähnen und der Prothesenbasis negativ beeinflussen können. Nach dem Kürzen des zumindest einen Prothesenzahns der vorkonfektionierten Prothesenzähne kann die Haltegeometrie angefräst werden, so dass eine Sollbruchstelle entsteht und die Prothesenzähne ohne großen Mehraufwand in die Prothese eingeklebt werden kann. Optional kann die Haltergeometrie auch als Positionierungshilfe beim späteren verkleben mit der Prothesenbasis verwendet werden.

Im Folgenden werden weitere Ausführungsbeispiele der Erfindung anhand von acht schematisch dargestellten Figuren erläutert, ohne jedoch dabei die Erfindung zu beschränken. Dabei zeigt:
Figur 1: eine schematische perspektivische Ansicht eines erfindungsgemäßen Vorprodukts zur Umsetzung eines erfindungsgemäßen Verfahrens und hergestellt mit einem erfindungsgemäßen Verfahren;
Figur 2: eine schematische Teilschnittansicht des erfindungsgemäßen Vorprodukts nach Figur 1, das zur Umsetzung eines erfindungsgemäßen Verfahrens in eine Haltevorrichtung einer CAM-Vorrichtung eingespannt ist;
Figur 3: eine schematische perspektivische Ansicht eines zweiten alternativen erfindungsgemäßen Vorprodukts;
Figur 4: eine schematische perspektivische Ansicht eines dritten alternativen erfindungsgemäßen Vorprodukts;
Figur 5: eine schematische perspektivische Ansicht eines vierten alternativen erfindungsgemäßen Vorprodukts;
Figur 6: eine schematische perspektivische Ansicht eines fünften alternativen erfindungsgemäßen Vorprodukts zur Umsetzung eines erfindungsgemäßen Verfahrens und hergestellt mit einem erfindungsgemäßen Verfahren;
Figur 7: den Ablauf eines erfindungsgemäßen Verfahrens zum Herstellen einer Dentalprothese eines erfindungsgemäßen Vorprodukts; und
Figur 8: eine schematische perspektivische Ansicht eines sechsten alternativen erfindungsgemäßen Vorprodukts.

In den Figuren werden teilweise auch für unterschiedliche Ausführungen der Übersichtlichkeit wegen die gleichen Bezugszeichen auch für unterschiedliche aber gleichartige Teile verwendet, wie beispielsweise für die Streben in unterschiedlicher Ausführung, die in der gesamten folgenden Figurenbeschreibung und in allen Figuren mit dem Bezugszeichen 2 gekennzeichnet sind. Ebenso wird bei den verschiedenen Ausführungsbeispielen nicht hinsichtlich der Richtungsbezeichnungen unterschieden.

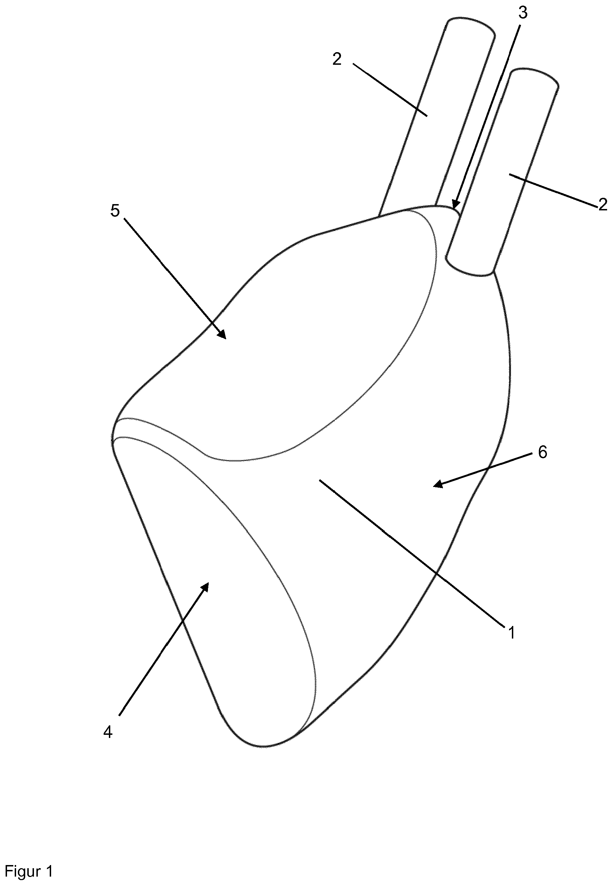

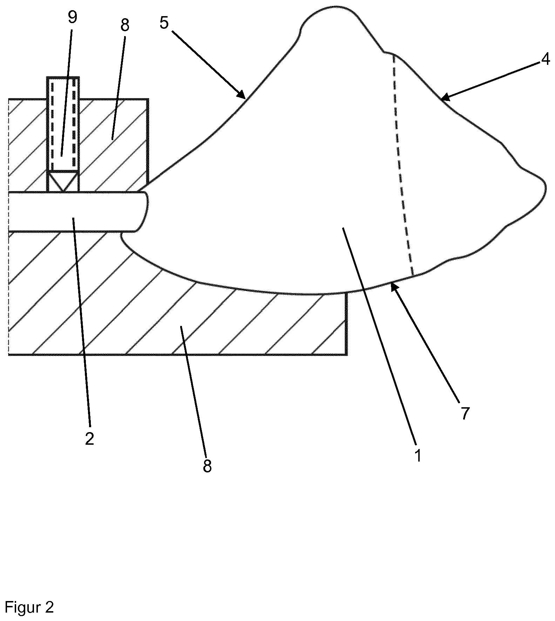

Figur 1 zeigt eine schematische perspektivische Ansicht eines erfindungsgemäßen Vorprodukts zur Umsetzung eines erfindungsgemäßen Verfahrens und hergestellt mit einem erfindungsgemäßen Verfahren. Figur 2 zeigt eine schematische Teilschnittansicht des erfindungsgemäßen Vorprodukts nach Figur 1, das zur Umsetzung eines erfindungsgemäßen Verfahrens in eine Haltevorrichtung einer CAM-Vorrichtung (nur teilweise gezeigt) eingespannt ist. Die Figuren 1 und 2 zeigen einen Prothesenzahn 1 zum Ersetzen eines Eckzahns. An dem einzelnen vorkonfektionierten Prothesenzahn 1 sind zwei zylindrische Streben 2 an einer koronalen Oberfläche 3 des Prothesenzahns 1 angeordnet. Der Prothesenzahn 1 und die beiden Streben 2 sind einteilig aus Kunststoff gefertigt. Hierzu wird der Kunststoff in flüssiger Form in eine Gussform als Negativform (Nicht gezeigt) durch zwei Kanäle eingespritzt, die nach dem Aushärten des Kunststoffs in der Gussform die Streben 2 formen. Wenn das Vorprodukt an den Streben 2 gehalten wird, sind die basale Oberfläche 4, die linguale Oberfläche 5, die approximalen Oberflächen 6 (beziehungsweise genauer die mesiale und die distale Oberflächen 6) sowie die vestibuläre Oberfläche 7 des Prothesenzahns 1 zugänglich und können mit der CAM-Vorrichtung bearbeitet werden. Die mesiale, distale, linguale und vestibuläre Oberfläche 5, 6, 7 bildet die Mantelfläche 5, 6, 7 des Prothesenzahns 1, die an die koronale Oberfläche 3 und die der koronalen Oberfläche 3 gegenüberliegende basale Oberfläche 4 grenzt.

Die CAM-Vorrichtung hat hierzu eine Haltevorrichtung 8, in die die Streben 2 eingesteckt werden können. Die Streben 2 können dort mit Hilfe einer Spannschraube 9 fixiert und befestigt werden, so dass das Vorprodukt in der Haltevorrichtung 8 und damit der CAM-Vorrichtung fixiert ist und mit einem Fräskopf der CAM-Vorrichtung subtraktiv bearbeitet werden kann. Es reicht aus, wenn, wie in Figur 2 dargestellt, die basale Oberfläche 4 und die daran angrenzende Mantelfläche 5, 6, 7 zugänglich sind. Auf diese Weise kann der Prothesenzahn 1 basal bearbeitet beziehungsweise gekürzt werden, so wie dies durch die gestrichelte Linie in Figur 2 angedeutet ist. Die Schnittfläche wird dabei mit einem CAD-Modell berechnet, so dass der basal gekürzte Prothesenzahn 1 mit einer Prothesenbasis (nicht gezeigt) verbunden werden kann und dabei die Bisshöhe des Prothesenzahns 1 passend zur Behandlungssituation beziehungsweise zum Patienten gewählt ist. Zusätzlich ist noch zumindest ein weiterer nicht gezeigter Prothesenzahn vorhanden, beispielsweise ein weiterer Eckzahn.

In Figur 2 ist also eine schematische Darstellung eines konkreten Ausführungsbeispiels eines Prothesenzahns 1 eines erfindungsgemäßen Vorprodukts dargestellt. Der Prothesenzahn 1 mit den Streben 2 als Haltegeometrie wird in die Haltevorrichtung 8 eingelegt und mit der Spannschraube 9 gespannt. Der Bereich rechts der gestrichelten Linie (in basaler Richtung) wird mit dem Fräskopf der CAM-Vorrichtung abgetragen. Die Haltevorrichtung 8 kann auch so ausgeführt werden, dass die Streben 2 am Ende der Bearbeitung angefräst wird, so dass der Prothesenzahn 1 abgebrochen werden kann, oder vollständig mit der Fräse durchtrennt werden. Bei dem erfindungsgemäßen Vorprodukt sind mehrere solcher Prothesenzähne 1 vorhanden, die separat vorliegen können.

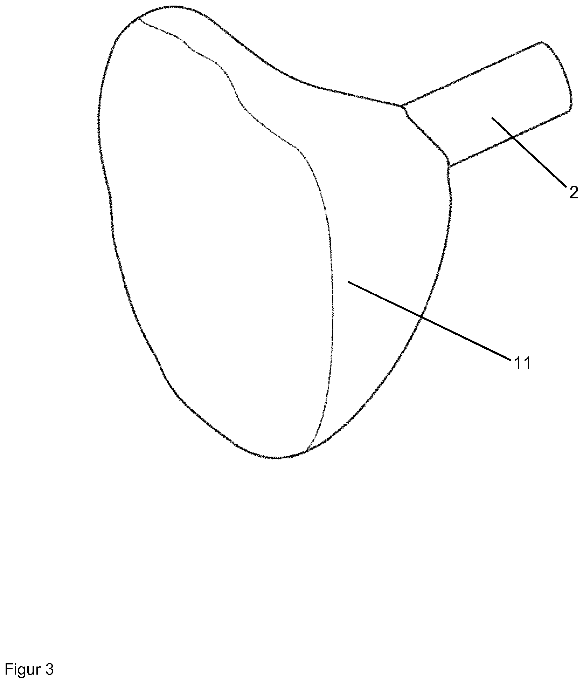

Figur 3 zeigt eine schematische perspektivische Ansicht eines zweiten alternativen erfindungsgemäßen Vorprodukts. Das Vorprodukt nach Figur 3 zeigt einen Prothesenzahn 11 zum Ersetzen eines Schneidezahns, wobei nur eine zylindrische Strebe 2 an einer lingualen Oberfläche des Prothesenzahns 11 befestigt ist. Das in Figur 3 gezeigte Vorprodukt kann mit der einzelnen Strebe 2 in eine dazu passende Haltevorrichtung, wie die Haltevorrichtung 8 nach Figur 2 eingespannt und nachfolgend basal bearbeitet werden. Zusätzlich ist noch zumindest ein weiterer nicht gezeigter Prothesenzahn vorhanden, beispielsweise ein Eckzahn nach den Figuren 1 und 2.

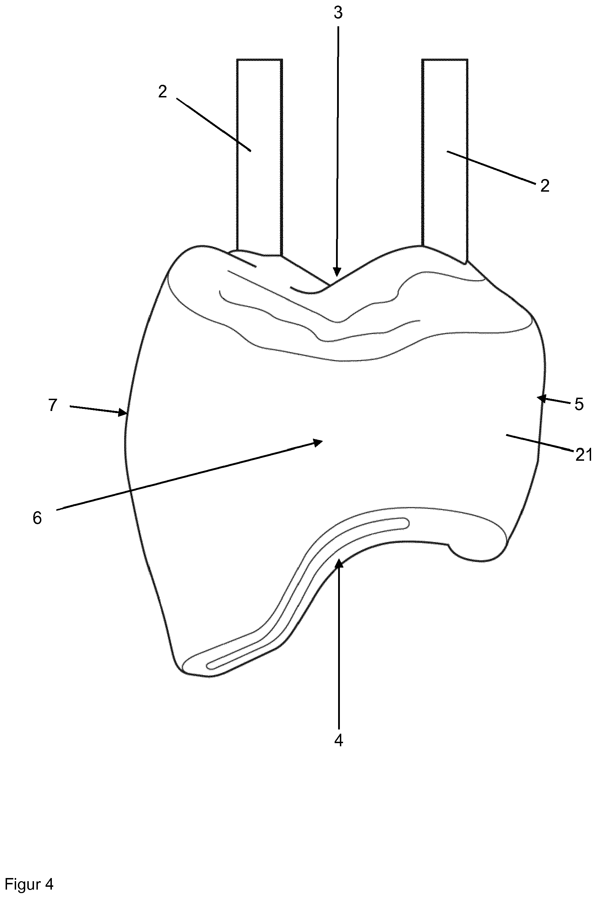

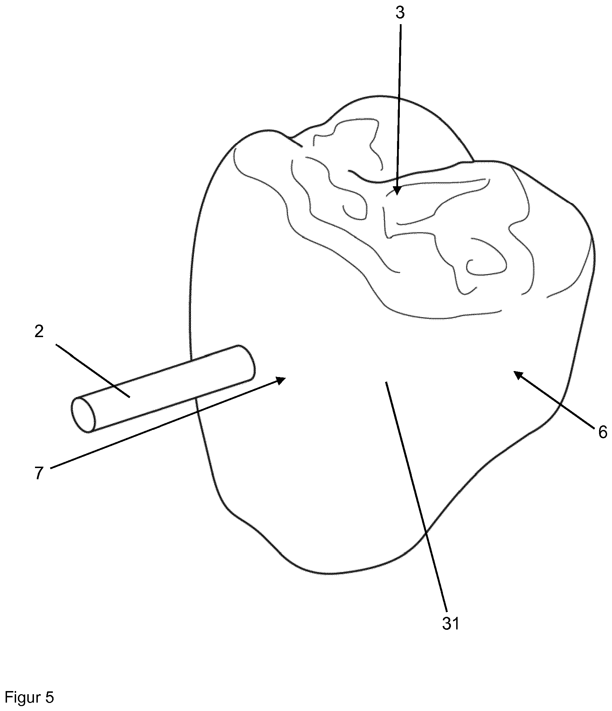

In eine solche CAM-Vorrichtung beziehungsweise in eine solche Haltevorrichtung 8 einer solchen CAM-Vorrichtung nach Figur 2 können selbstverständlich auch andere vorgeformte und vorkonfektionierte Prothesenzähne eingespannt beziehungsweise fixiert werden. Als Beispiele seien hier die Vorprodukte nach den Figuren 4 und 5 genannt.

Figur 4 zeigt eine schematische perspektivische Ansicht eines dritten alternativen erfindungsgemäßen Vorprodukts. Das Vorprodukt nach Figur 4 zeigt einen Prothesenzahn 21 zum Ersetzen eines Backenzahns, wobei zwei zylindrische Streben 2 an einer koronalen Oberfläche 3 des Prothesenzahns 21 befestigt ist. Eine der koronalen Oberfläche 3 gegenüberliegende basale Oberfläche 4 des vorkonfektionierten Prothesenzahns 21 ist dadurch frei zugänglich. Aber auch die an die koronale Oberfläche 3 und die basale Oberfläche 4 angrenzende linguale Oberfläche 5, approximale Oberfläche 6 (distale oder mesiale Oberfläche), die in Figur 4 nicht zu sehende zweite approximale Oberfläche, die der approximalen Oberfläche 6 gegenüberliegend angeordnet ist, und die vestibuläre Oberfläche 7 des Prothesenzahns 21 sind zugänglich, wenn das Vorprodukt an den Streben 2 in einer CAM-Fräse eingespannt ist. Zusätzlich ist noch zumindest ein weiterer nicht gezeigter Prothesenzahn vorhanden, beispielsweise zwei weitere Backenzähne.

Figur 5 zeigt eine schematische perspektivische Ansicht eines vierten alternativen erfindungsgemäßen Vorprodukts. Das Vorprodukt nach Figur 5 zeigt einen Prothesenzahn 31 zum Ersetzen eines Backenzahns, wobei nur eine zylindrische Strebe 2 an einer vestibulären Oberfläche 7 des Prothesenzahns 31 befestigt ist. Der Prothesenzahn 31 hat zudem eine koronale Oberfläche 3 und eine der koronalen Oberfläche 3 gegenüberliegende basale Oberfläche (in Figur 5 nicht zu sehen). An die koronale Oberfläche 3 und die basale Oberfläche angrenzend befinden sich eine linguale Oberfläche 5, eine approximale Oberfläche 6 (genauer eine distale oder mesiale Oberfläche 6), die in Figur 5 nicht zu sehende linguale Oberfläche, die der vestibulären Oberfläche 7 gegenüberliegend angeordnet ist, und die in Figur 5 ebenfalls nicht zu sehende zweite approximale Oberfläche (genauer eine distale oder mesiale Oberfläche), die der approximalen Oberfläche 6 gegenüberliegend angeordnet ist. Zusätzlich ist noch zumindest ein weiterer nicht gezeigter Prothesenzahn vorhanden, beispielsweise zwei weitere Backenzähne.

Die Streben 2 nach den Figuren 1 bis 5 können auch anstatt mit einem runden auch mit einem eckigen Querschnitt ausgeführt werden. Die eckige Form der Streben dient dann als Verdrehschutz. Das ist insbesondere bei solchen Ausführungen hilfreich, bei denen nur eine Strebe als Haltegeometrie verwendet wird, so wie das in den Figuren 3 und 5 gezeigt ist.

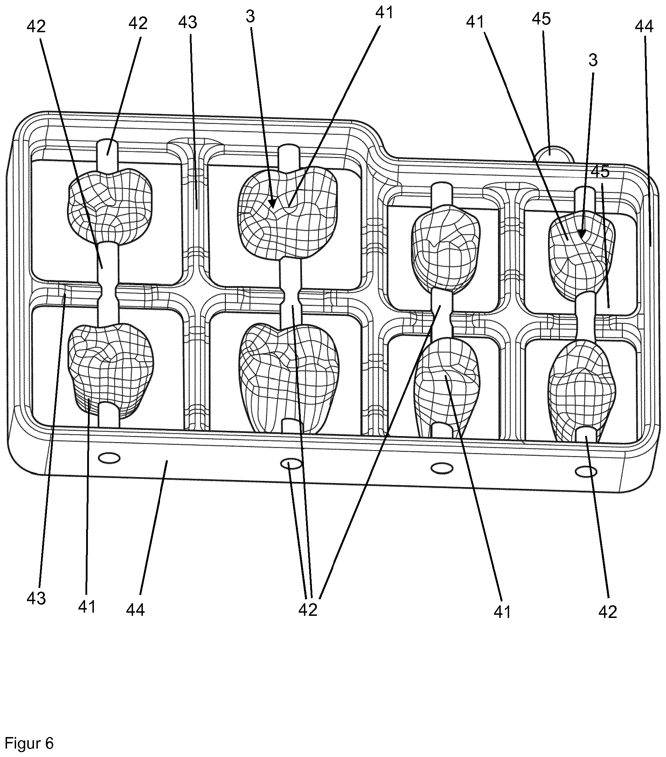

Figur 6 zeigt eine schematische perspektivische Ansicht eines fünften alternativen erfindungsgemäßen Vorprodukts zur Umsetzung eines erfindungsgemäßen Verfahrens und hergestellt mit einem erfindungsgemäßen Verfahren.

Das Vorprodukt weist acht unterschiedliche molare und prämolare Prothesenzähne 41 auf, die über jeweils zwei zylindrische Streben 42 mit einem Rahmen 42, 43 beziehungsweise mit einem inneren Rahmen 43 verbunden sind. Der dünnere innere Rahmen 43 ist mit einem massiven äußeren Rahmen 44 verbunden. An dem äußeren Rahmen 44 ist ein Griff 45 angeordnet, mit dem das Vorprodukt zwischen zwei Fingern gehalten, gegriffen und transportiert werden kann. Der innere Rahmen 43, der äußere Rahmen 44 und die Streben 42 bilden eine Haltegeometrie, mit der die Prothesenzähne 41 in Position gehalten werden. Das Vorprodukt kann mit dem äußeren Rahmen 44 in einer CAM-Fräse befestigt werden, um die Prothesenzähne 41 basal zu bearbeiten. Die Prothesenzähne 41 sind zu diesem Zweck alle gleichsinnig ausgerichtet. In Figur 6 blickt man daher auf die koronalen Seiten der Prothesenzähne 41. Zudem sind von den Prothesenzähnen 41 in Figur 6 auch noch die lingualen Seiten (oberer Reihe) und die vestibulären Seiten (untere Reihe) zu sehen. Die der koronalen Seite gegenüberliegenden basalen Oberflächen der Prothesenzähne 41 sind daher alle von der gleichen Seite des Vorprodukts aus zugänglich und bearbeitbar.

Bei allen Prothesenzähnen 41 sind die Streben 42 mit den lingualen und mit den vestibulären Oberflächen der Prothesenzähne 41 einteilig verbunden. Jeweils zwei Prothesenzähne 41 und die mit diesen Prothesenzähnen 41 verbundenen Streben 42 sind einteilig aus Kunststoff durch Spritzgießen mit einer gemeinsamen Gussform gefertigt. Die gemeinsame Gussform weist Kanäle zum Einleiten des Kunststoffs auf, die die Streben 42 formen. Diese vier Paare werden anschließend mit dem inneren Rahmen 43 und dem äußeren Rahmen 44 miteinander verbunden. Hierzu können die vier Paare bestehend aus jeweils zwei Prothesenzähnen 41 und den damit einteilig verbundenen Streben 42 in eine Rahmenform zur Herstellung des Rahmens 43, 44 eingesetzt werden. In der Rahmenform werden die Paare dann miteinander verbunden und der Rahmen 43, 44 wird ebenfalls einteilig hergestellt. Das gesamte Vorprodukt einschließlich der Prothesenzähne 41, der Streben 42, des inneren Rahmens 43 und des äußeren Rahmens 44 kann aber auch einteilig durch Spritzgießen aus Kunststoff in einer gemeinsamen Spritzgussform gefertigt werden.

Bei der Ausführung nach Figur 6 werden mehrere Prothesenzähne 41 in einem Blanko mit den Streben 42 als Haltepins und dem Rahmen 43, 44 ausgeführt. Die Streben 42 und der Rahmen 43, 44 bilden Angusskanäle für die Prothesenzähne 41. Alternativ zu dem mit abgerundeten Ecken ausgeführten äußeren Rahmen 44 kann auch ein runder Rahmen verwendet werden, wenn dies besser zur Befestigung an einer Haltevorrichtung der CAM-Fräse geeignet ist, mit der das Vorprodukt subtraktiv bearbeitet wird beziehungsweise die Prothesenzähne 41 des Vorprodukts basal subtraktiv bearbeitet werden.

Nach der basalen Bearbeitung (der basalen Kürzung) der Prothesenzähne 41 mit der CAM-Fräse werden die Streben 42 direkt neben den Prothesenzähnen 41 angefräst, so dass sie an dem Übergang zum Prothesenzahn 41 sehr dünn sind und dort Sollbruchstellen bilden. Die basal bearbeiteten Prothesenzähne 41 können dann einfach aus dem Rahmen 43, 44 herausgebrochen werden, um sie in eine Prothesenbasis (nicht gezeigt) einzukleben. Zuvor können die Bruchflächen noch geglättet werden.

Alternativ zu der in Figur 6 gezeigten Ausführung könne auch vollständige Sätze von Prothesenzähnen für den Oberkiefer oder den Unterkiefer oder das gesamte Gebiss (32 Prothesenzähne) in einem Rahmen gehalten werden. Ebenso kann, um Reste zu vermeiden oder eine Lagerhaltung zu vermeiden, auch ein Vorprodukt mit nur zwei Prothesenzähnen oder drei oder vier oder sechs Prothesenzähnen verwendet werden.

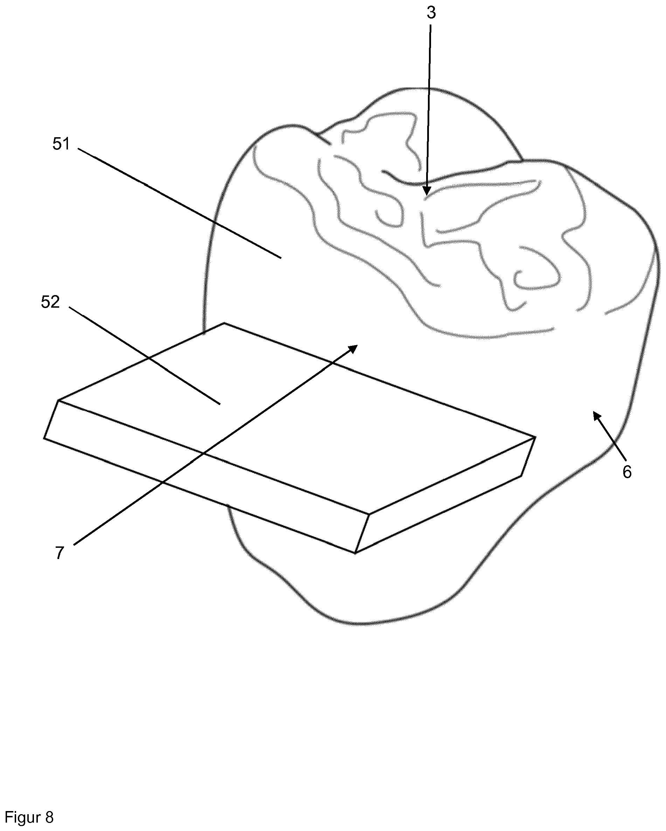

Auch bei den Prothesenzähnen 1 nach den Figuren 1 bis 5 und bei dem Prothesenzahn 51 nach Figur 8 kann an den Streben 2, 52 ein Rahmen 43, 44 wie nach Figur 6 befestigt sein, um den jeweiligen Prothesenzahn 1, 51 oder eine Mehrzahl von Prothesenzähnen 1, 51 zu halten.

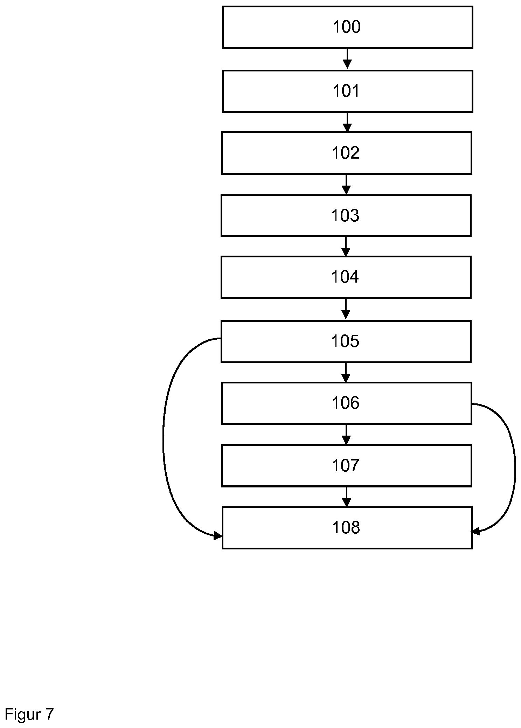

Im Folgenden wird ein beispielhaftes Verfahren anhand der Vorprodukte der Figuren 1 bis 6 und 8 erläutert. Der Ablauf des beispielhaften Verfahrens ist in Figur 7 dargestellt.

In einem ersten Arbeitsschritt 100 wird eine Spritzgussform (nicht gezeigt) zur Herstellung eines dentalen Vorprodukts nach einem der Figuren 1 bis 6 bereitgestellt. Die Spritzgussform hat dazu zumindest eine Prothesenzahnform zum Formen der Oberflächen 3, 4, 5, 6, 7 des Prothesenzahns 1, 11, 21, 31 oder der Prothesenzähne 41 und zumindest einen Kanal zum Durchleiten eines Fluids, wie eines flüssigen Kunststoffs, und zum Formen der Strebe(n) 2, 42.

In einem nachfolgenden Arbeitsschritt 101 erfolgt ein Einspritzen, Stopfen und/oder Einpressen eines flüssigen Kunststoffs in die Spritzgussform mit einer geeigneten Spritzgusstechnik. Anschließend wird in einem Arbeitsschritt 102 der Kunststoff in der Spritzgussform ausgehärtet. Danach erfolgt ein Entformen des so hergestellten Vorprodukts in einem Arbeitsschritt 103 durch Öffnen der Spritzgussform und durch Trennen der Spritzgussform oder der Teile der Spritzgussform von dem Vorprodukt. Dabei kann das Vorprodukt auch entgratet werden. Dies ist aber eigentlich nicht notwendig, wenn die Grate des Vorprodukts nur an den Streben 2, 42 und den basalen Oberflächen 4 der Prothesenzähne 1, 11, 21, 31, 41 und gegebenenfalls an dem Rahmen 43, 44 und gegebenenfalls an dem Griff 45 vorhanden sind, da die Streben 2, 42 und gegebenenfalls der Rahmen 43, 44 und der Griff gar nicht Teil der herzustellenden Dentalprothese werden und da die Prothesenzähne 1, 11, 21, 31, 41 ohnehin basal bearbeitet werden und dabei dort angeordnete Grate ohne Aufwand mit entfernt werden können oder sogar müssen.

In einem nachfolgenden Arbeitsschritt 104 erfolgt ein Einspannen des Vorprodukts in eine CAM-Vorrichtung, wie einer computergesteuerten CAM-Fräse. Nach Maßgabe eines virtuellen Modells der für die Dentalprothese zum Einsetzen in die Prothesenbasis benötigten gekürzten Prothesenzähne (nicht gezeigt) werden die Prothesenzähne 1, 11, 21, 31, 41 mit der CAM-Vorrichtung mit einem spanabhebenden Verfahren in einem Arbeitsschritt 105 basal gekürzt, vorzugsweise unter Anwendung einer computergesteuerten CAM-Fräse auf Basis eines virtuellen Modells der gekürzten Prothesenzähne.

Anschließend erfolgt in einem Arbeitsschritt 106 ein Trennen der zumindest teilweise basal gekürzten Prothesenzähne durch Trennen der Streben 2, 42. Alternativ können die Streben 2, 42 auch zur Herstellung von Sollbruchstellen angefräst werden, so dass die basal gekürzten Prothesenzähne von den Streben 2, 42 abgebrochen oder herausgedrückt werden können. Optional folgt nun ein Nachbearbeiten der basal gekürzten Prothesenzähne in einem Arbeitsschritt 107.

Nach der Nachbearbeitung oder dem Trennen der basal gekürzten Prothesenzähne von der restlichen Haltegeometrie 2, 42, 43, 44 erfolgt mit einem letzten Arbeitsschritt 108 ein Einsetzen und Einkleben der basal gekürzten Prothesenzähne in eine Prothesenbasis (nicht gezeigt) zur Herstellung der Dentalprothese. Dabei kann nach dem Aushärten des Klebstoffs noch eine Politur der Dentalprothese durchgeführt werden.

Figur 8 zeigt eine schematische perspektivische Ansicht eines sechsten alternativen erfindungsgemäßen Vorprodukts. Das Vorprodukt nach Figur 8 zeigt einen Prothesenzahn 51 zum Ersetzen eines Backenzahns, wobei nur eine Strebe 52 in Form einer bereichsweise quaderförmigen flachen Platte als Filmanguss an einer vestibulären Oberfläche 7 des Prothesenzahns 51 befestigt ist. Zusätzlich ist zumindest ein weiterer Prothesenzahn (nicht gezeigt) vorhanden, der analog dem Prothesenzahn 51 aufgebaut ist. Der Prothesenzahn 51 hat zudem eine koronale Oberfläche 3 und eine der koronalen Oberfläche 3 gegenüberliegende basale Oberfläche (in Figur 8 nicht zu sehen). An die koronale Oberfläche 3 und die basale Oberfläche angrenzend befinden sich eine linguale Oberfläche 5, eine approximale Oberfläche 6 (genauer eine distale oder mesiale Oberfläche 6), die in Figur 8 nicht zu sehende linguale Oberfläche, die der vestibulären Oberfläche 7 gegenüberliegend angeordnet ist, und die in Figur 8 ebenfalls nicht zu sehende zweite approximale Oberfläche (genauer eine distale oder mesiale Oberfläche), die der approximalen Oberfläche 6 gegenüberliegend angeordnet ist. Die Strebe 52 als Filmanguss ermöglicht eine stabile und drehsichere Verbindung zu der CAM-Vorrichtung, mit der der Prothesenzahn 52 bearbeitet wird. Zudem kann durch den Filmanguss ein hoher Materialfluss des flüssigen Kunststoffs bei der Herstellung der Prothesenzahns 51 mit einer Prothesenzahnform nach einem erfindungsgemäßen Verfahren erreicht werden.

### Bezugszeichenliste

- 1: Prothesenzahn
- 2: Strebe
- 3: Koronale Oberfläche
- 4: Basale Oberfläche
- 5: Linguale Oberfläche
- 6: Approximale Oberfläche
- 7: Vestibuläre Oberfläche
- 8: Haltevorrichtung
- 9: Schraube
- 11, 21: Prothesenzahn
- 31, 41: Prothesenzahn
- 42: Strebe
- 43: Innerer Rahmen
- 44: Äußerer Rahmen
- 45: Griff
- 51: Prothesenzahn
- 52: Strebe
- 100: Arbeitsschritt: Bereitstellen einer Spritzgussform
- 101: Arbeitsschritt: Einspritzen eines Kunststoffs in die Spritzgussform
- 102: Arbeitsschritt: Aushärten des Kunststoffs
- 103: Arbeitsschritt: Entformen des Vorprodukts
- 104: Arbeitsschritt: Einspannen des Vorprodukts in eine CAM-Vorrichtung
- 105: Arbeitsschritt: Basales Kürzen der Prothesenzähne des Vorprodukts
- 106: Arbeitsschritt: Trennen der Prothesenzähne durch Trennen der Strebe(n)
- 107: Arbeitsschritt: Nachbearbeiten der Prothesenzähne
- 108: Arbeitsschritt: Einsetzen und Einkleben der Prothesenzähne in eine Prothesenbasis

## Patentansprüche

1. Vorprodukt zur Herstellung von Prothesenzähnen für eine Dentalprothese, wobei das Vorprodukt aus einem Kunststoff besteht und das Vorprodukt aufweisend eine Mehrzahl vorkonfektionierter Prothesenzähne (1, 11, 21, 31, 41, 51) und eine Haltegeometrie, die vorkonfektionierten Prothesenzähne (1, 11, 21, 31, 41, 51) aufweisend eine vorgeformte koronale Oberfläche (3) und eine vorgeformte Mantelfläche (5, 6, 7), die an die koronale Oberfläche (3) angrenzt,
die Haltegeometrie aufweisend zumindest eine Strebe (2, 42, 52), wobei die zumindest eine Strebe (2, 42, 52) mit zumindest einem der vorkonfektionierten Prothesenzähne (1, 11, 21, 31, 41, 51) einteilig ausgeführt ist, wobei die vorkonfektionierten Prothesenzähne (1, 11, 21, 31, 41, 51) mit der Haltegeometrie in einer Halterung (8) einer CAM-Vorrichtung derart positionsfest fixierbar sind, dass die vorkonfektionierten Prothesenzähne (1, 11, 21, 31, 41, 51) mit der CAM-Vorrichtung mechanisch bearbeitbar sind, wobei
die zumindest eine Strebe (2, 42, 52) der Haltegeometrie an der koronalen Oberfläche (3) oder der Mantelfläche (5, 6, 7) oder der koronalen Oberfläche (3) und der Mantelfläche (5, 6, 7) zumindest eines Prothesenzahns der vorkonfektionierten Prothesenzähne (1, 11, 21, 31, 41, 51) mit den Prothesenzähnen (1, 11, 21, 31, 41, 51) verbunden ist, **dadurch gekennzeichnet, dass** keine der zumindest einen Strebe (2, 42, 52) der Haltegeometrie auf einer basalen Oberfläche (4) des zumindest einen Prothesenzahns der vorkonfektionierten Prothesenzähne (1, 11, 21, 31, 41, 51) angeordnet ist.

2. Vorprodukt nach Anspruch 1, **dadurch gekennzeichnet, dass**
das Vorprodukt aus einem zahnfarbenem Kunststoff mit einer Shore-Härte (SHORE Härte D) von wenigstens 50 besteht, besonders bevorzugt von wenigstens 70 besteht.

3. Vorprodukt nach einem der vorangehenden Ansprüche, **dadurch gekennzeichnet, dass** jeder Prothesenzahn (1, 11, 21, 31, 41, 51) der vorkonfektionierten Prothesenzähne (1, 11, 21, 31, 41, 51) mit einer Strebe (2, 42, 52) oder mit zwei Streben (2, 42, 52) oder mit drei Streben als die zumindest eine Strebe (2, 42, 52) einteilig verbunden ausgeführt ist.

4. Vorprodukt nach einem der vorangehenden Ansprüche, **dadurch gekennzeichnet, dass** die zumindest eine Strebe (2, 42, 52) der Haltegeometrie an der koronalen Oberfläche (3) oder einer lingualen Oberfläche (5) oder einer approximalen Oberfläche (6) oder einer vestibulären Oberfläche (7) oder der koronalen Oberfläche (3) und wenigstens einer der lingualen Oberfläche (5), der vestibulären Oberfläche (7), einer distalen Oberfläche (6) und einer mesialen Oberfläche (6) zumindest eines Prothesenzahns der vorkonfektionierten Prothesenzähne (1, 11, 21, 31, 41, 51) mit dem zumindest einen Prothesenzahn (1, 11, 21, 31, 41, 51) der vorkonfektionierten Prothesenzähne (1, 11, 21, 31, 41, 51) verbunden ist.

5. Vorprodukt nach einem der vorangehenden Ansprüche, **dadurch gekennzeichnet, dass** die Haltegeometrie einen Rahmen (43, 44) aufweist, der zumindest einen Prothesenzahn (1, 11, 21, 31, 41, 51) der vorkonfektionierten Prothesenzähne (1, 11, 21, 31, 41, 51) zumindest bereichsweise umfasst, wobei der Rahmen (43, 44) über die zumindest eine Strebe (2, 42, 52) mit dem zumindest einen Prothesenzahn (1, 11, 21, 31, 41, 51) der vorkonfektionierten Prothesenzähne (1, 11, 21, 31, 41, 51) verbunden ist, wobei vorzugsweise der Rahmen (43, 44) einteilig mit der zumindest einen Strebe (2, 42, 52) und den vorkonfektionierten Prothesenzähnen (1, 11, 21, 31, 41, 51) ausgeführt ist.

6. Vorprodukt nach Anspruch 5, **dadurch gekennzeichnet, dass**
der Rahmen (43, 44) jeden einzelnen Prothesenzahn (1, 11, 21, 31, 41, 51) der vorkonfektionierten Prothesenzähne (1, 11, 21, 31, 41, 51) umgibt, und/oder der Rahmen (43, 44) die Mantelfläche (5, 6, 7) jedes einzelnen Prothesenzahns (1, 11, 21, 31, 41, 51) der vorkonfektionierten Prothesenzähne (1, 11, 21, 31, 41, 51) umgibt oder umschließt.

7. Vorprodukt nach einem der vorangehenden Ansprüche, **dadurch gekennzeichnet, dass** die vorkonfektionierten Prothesenzähne (41) über die zumindest eine Strebe (42) miteinander verbunden sind oder die vorkonfektionierten Prothesenzähne (41) über die zumindest eine Strebe (42) und einen Rahmen (43, 44) miteinander verbunden sind.

8. Vorprodukt nach einem der vorangehenden Ansprüche, **dadurch gekennzeichnet, dass** alle Prothesenzähne (41) der vorkonfektionierten Prothesenzähnen (41) gleich ausgerichtet sind, wobei basale Oberflächen aller Prothesenzähne (41) von einer Seite des Vorprodukts aus zugänglich sind.

9. Vorprodukt nach einem der vorangehenden Ansprüche, **dadurch gekennzeichnet, dass** das Vorprodukt durch Ausgießen oder Ausspritzen einer Gussform mit einem Kunststoff hergestellt ist, wobei vorzugsweise wenigstens eine der zumindest einen Strebe (2, 42, 52) durch einen Kanal, insbesondere einen Angusskanal, geformt ist, und/oder
die zumindest eine Strebe (2, 42, 52) einen Querschnitt von wenigstens 1 mm hat, bevorzugt einen Querschnitt zwischen 1 mm und 3 mm hat.

10. Verfahren zum Herstellen eines Vorprodukts nach einem der vorangehenden Ansprüche, **gekennzeichnet durch** die Schritte:
Bereitstellen einer Gussform zum Formen des Vorprodukts, wobei die Gussform mehrere Prothesenzahnformen als Negativformen zum Formen der vorkonfektionierten Prothesenzähne (1, 11, 21, 31, 41, 51) aufweist und wobei die Gussform zumindest einen Kanal zum Angießen der Prothesenzahnformen aufweist; Einspritzen oder Einpressen eines flüssigen Kunststoffs in die Gussform, wobei der Kunststoff durch den zumindest einen Kanal hindurch in die Prothesenzahnformen fließt, wobei der zumindest eine Kanal die zumindest eine Strebe (2, 42, 52) formt; Aushärten des Kunststoffs in der Gussform; und
Entformen des ausgehärteten Kunststoffs.

11. Verfahren nach Anspruch 10, **dadurch gekennzeichnet, dass**
die Prothesenzahnformen durch jeweils wenigstens einen des zumindest einen Kanals miteinander verbunden sind oder
die Prothesenzahnformen über jeweils wenigstens einen des zumindest einen Kanals und über eine Rahmenform der Gussform miteinander verbunden sind, und/oder die Gussform aus zwei oder mehr Teilen zusammengesetzt wird, wobei jeder des zumindest einen Kanals durch zwei Teile der Gussform geformt wird.

12. Verfahren zur Herstellung einer Dentalprothese mit einem CAM-Verfahren, aufweisend die Schritte:
A) Bereitstellen eines Vorprodukts nach einem der Ansprüche 1 bis 9, oder Herstellen eines solchen Vorprodukts mit einem Herstellungs-Verfahren nach einem der Ansprüche 10 oder 11;
B) Fixieren des Vorprodukts in einer CAM-Vorrichtung;
C) anschließendes subtraktives Bearbeiten, insbesondere Kürzen zumindest eines Prothesenzahns (1, 11, 21, 31, 41, 51) der vorkonfektionierten Prothesenzähne (1, 11, 21, 31, 41, 51) mit der CAM-Vorrichtung nach Maßgabe eines individuellen virtuellen Modells;
D) Trennen des zumindest einen bearbeiteten Prothesenzahns von der Haltegeometrie durch Auftrennen oder Brechen der zumindest einen Strebe (2, 42, 52), insbesondere an einer Oberfläche des zumindest einen bearbeiteten Prothesenzahns; und
E) Einsetzen und Verbinden des zumindest einen bearbeiteten Prothesenzahns mit einer Prothesenbasis zur Herstellung der Dentalprothese.

13. Verfahren nach Anspruch 12, **dadurch gekennzeichnet, dass** der zumindest eine Prothesenzahn (1, 11, 21, 31, 41, 51) der vorkonfektionierten Prothesenzähne (1, 11, 21, 31, 41, 51) in Schritt C) nach Maßgabe des individuellen virtuellen Modells basal gekürzt wird.

14. Verfahren nach Anspruch 12 oder 13, **dadurch gekennzeichnet, dass** in Schritt D) ein Rahmen (43, 44) des Vorprodukts und/oder Teile der zumindest einen Strebe (2, 42, 52) mit der CAM-Vorrichtung verbunden bleibt, während der zumindest eine bearbeitete Prothesenzahn gelöst wird oder die bearbeiteten und unbearbeiteten Prothesenzähne gelöst werden.

15. Verfahren nach einem der Ansprüche 12 bis 14, **dadurch gekennzeichnet, dass** nach Schritt C) die Haltegeometrie, insbesondere die zumindest eine Strebe (2, 42, 52), angefräst werden, so dass eine Sollbruchstelle entsteht, wobei die Sollbruchstelle in Schritt D), der nach Schritt C) erfolgt, zum Trennen des zumindest einen bearbeiteten Prothesenzahns von der Haltegeometrie oder der bearbeiteten und unbearbeiteten Prothesenzähne von der Haltegeometrie benutzt wird, und/oder der zumindest eine mit der Haltegeometrie noch verbundene bearbeitete Prothesenzahn nach Schritt C) in die Prothesenbasis eingesetzt und mit der Prothesenbasis verbunden wird, bevor der zumindest eine bearbeitete Prothesenzahn von der Haltegeometrie getrennt wird oder die bearbeiteten und unbearbeiteten Prothesenzähne von der Haltegeometrie getrennt werden, so dass Schritt E) nach Schritt C) erfolgt und Schritt D) nach Schritt E) erfolgt.

## Claims

1. A preliminary product for the production of prosthetic teeth for a dental prosthesis, wherein the preliminary product consists of a plastics material and the preliminary product having a plurality of prefabricated prosthetic teeth (1, 11, 21, 31, 41, 51) and a mounting geometry, the prefabricated prosthetic teeth (1, 11, 21, 31, 41, 51) having a preformed coronal surface (3) and a preformed circumferential surface (5, 6, 7) which adjoins the coronal surface (3),
the mounting geometry having at least one strut (2, 42, 52), wherein the at least one strut (2, 42, 52) is embodied in one piece with at least one of the prefabricated prosthetic teeth (1, 11, 21, 31, 41, 51), wherein the prefabricated prosthetic teeth (1, 11, 21, 31, 41, 51) are fixable in position with the mounting geometry in a mount (8) of a CAM apparatus in such a way that the prefabricated prosthetic teeth (1, 11, 21, 31, 41, 51) are mechanically machinable with the CAM apparatus, wherein
the at least one strut (2, 42, 52) of the mounting geometry is connected to the prosthetic teeth (1, 11, 21, 31, 41, 51) at the coronal surface (3) or the circumferential surface (5, 6, 7) or the coronal surface (3) and the circumferential surface (5, 6, 7) of at least one prosthetic tooth of the prefabricated prosthetic teeth (1, 11, 21, 31, 41, 51), **characterized in that**
none of the at least one strut (2, 42, 52) of the mounting geometry is arranged on a basal surface (4) of the at least one prosthetic tooth of the prefabricated prosthetic teeth (1, 11, 21, 31, 41, 51).

2. The preliminary product according to Claim 1, **characterized in that**
the preliminary product consists of a tooth-colored plastics material with a Shore hardness (SHORE D hardness) of at least 50, particular preferably of at least 70.

3. The preliminary product according to any one of the preceding claims, **characterized in that**
each prosthetic tooth (1, 11, 21, 31, 41, 51) of the prefabricated prosthetic teeth (1, 11, 21, 31, 41, 51) is embodied connected in one piece to one strut (2, 42, 52) or to two struts (2, 42, 52) or to three struts as the at least one strut (2, 42, 52).

4. The preliminary product according to any one of the preceding claims, **characterized in that**
the at least one strut (2, 42, 52) of the mounting geometry is connected to at least one prosthetic tooth of the prefabricated prosthetic teeth (1, 11, 21, 31, 41, 51) at the coronal surface (3) or a lingual surface (5) or an approximal surface (6) or a vestibular surface (7) or the coronal surface (3) and at least one of the lingual surface (5), the vestibular surface (7), a distal surface (6) and a mesial surface (6) of the at least one prosthetic tooth (1, 11, 21, 31, 41, 51) of the prefabricated prosthetic teeth (1, 11, 21, 31, 41, 51).

5. The preliminary product according to any one of the preceding claims, **characterized in that**
the mounting geometry has a frame (43, 44) which encompasses the at least one prosthetic tooth (1, 11, 21, 31, 41, 51) of the prefabricated prosthetic teeth (1, 11, 21, 31, 41, 51) at least in places, wherein the frame (43, 44) is connected via the at least one strut (2, 42, 52) to the at least one prosthetic tooth (1, 11, 21, 31, 41, 51) of the prefabricated prosthetic teeth (1, 11, 21, 31, 41, 51), wherein preferably the frame (43, 44) is embodied in one piece with the at least one strut (2, 42, 52) and the prefabricated prosthetic teeth (1, 11, 21, 31, 41, 51).

6. The preliminary product according to Claim 5, **characterized in that**
the frame (43, 44) surrounds each individual prosthetic tooth (1, 11, 21, 31, 41, 51) of the prefabricated prosthetic teeth (1, 11, 21, 31, 41, 51), and/or
the frame (43, 44) surrounds or encloses the circumferential surface (5, 6, 7) of each individual prosthetic tooth (1, 11, 21, 31, 41, 51) of the prefabricated prosthetic teeth (1, 11, 21, 31, 41, 51).

7. The preliminary product according to any one of the preceding claims, **characterized in that**
the prefabricated prosthetic teeth (41) are connected to each other via the at least one strut (42) or the prefabricated prosthetic teeth (41) are connected to each other via the at least one strut (42) and a frame (43, 44).

8. The preliminary product according to any one of the preceding claims, **characterized in that**
all the prosthetic teeth (41) of the prefabricated prosthetic teeth (41) are identically oriented, wherein basal surfaces of all the prosthetic teeth (41) are accessible from one side of the preliminary product.

9. The preliminary product according to any one of the preceding claims, **characterized in that**
the preliminary product is produced by filling a casting mold with a plastics material by casting or injection, wherein preferably at least one of the at least one strut (2, 42, 52) is formed by a channel, in particular a runner, and/or
the at least one strut (2, 42, 52) has a cross-section of at least 1 mm, preferably a cross-section of between 1 mm and 3 mm.

10. A method for the production of a preliminary product according to any one of the preceding claims, **characterized by** the steps of:
providing a casting mold for forming the preliminary product, wherein the casting mold has prosthetic tooth molds as the negative molds for forming the prefabricated prosthetic teeth (1, 11, 21, 31, 41, 51) and wherein the casting mold has at least one channel for feeding the prosthetic tooth molds;
injecting or pressing a liquid plastics material into the casting mold, wherein the plastics material flows through the at least one channel into the prosthetic tooth molds, wherein the at least one channel forms the at least one strut (2, 42, 52);
curing the plastics material in the casting mold; and
demolding the cured plastics material.

11. The method according to Claim 10, **characterized in that**
the prosthetic tooth molds are connected to each other by in each case at least one of the at least one channel or
the prosthetic tooth molds are connected to each other via in each case at least one of the at least one channel and via a frame mold of the casting mold, and/or
the casting mold is composed of two or more parts, wherein each of the at least one channel is formed by two parts of the casting mold.

12. A method for the production of a dental prosthesis using a CAM method, having the steps of:
A) providing a preliminary product according to any one of Claims 1 to 9 or producing a preliminary product using a method according to any one of Claims 10 or 11;
B) fixing the preliminary product in a CAM apparatus;
C) subsequent subtractive machining, in particular shortening, of at least one prosthetic tooth (1, 11, 21, 31, 41, 51) of the prefabricated prosthetic teeth (1, 11, 21, 31, 41, 51) using the CAM apparatus in line with an individual virtual model;
D) separating the at least one machined prosthetic tooth from the mounting geometry by severing or breaking the at least one strut (2, 42, 52), in particular at a surface of the at least one machined prosthetic tooth; and
E) inserting and connecting the at least one machined prosthetic tooth to a prosthetic base to produce the dental prosthesis.

13. The method according to Claim 12, **characterized in that** the at least one prosthetic tooth (1, 11, 21, 31, 41, 51) of the prefabricated prosthetic teeth (1, 11, 21, 31, 41, 51) is basally shortened in step C) in line with the individual virtual model.

14. The method according to Claim 12 or 13, **characterized in that** in step D) a frame (43, 44) of the preliminary product and/or parts of the at least one strut (2, 42, 52) remains connected to the CAM apparatus, while the at least one machined prosthetic tooth is detached or the machined and unmachined prosthetic teeth are detached.

15. The method according to any one of Claims 12 to 14, **characterized in that** after step C) the mounting geometry, in particular the at least one strut (2, 42, 52), is milled, such that a predetermined breaking point arises, wherein the predetermined breaking point is used in step D), which proceeds after step C), to separate the at least one machined prosthetic tooth from the mounting geometry or the machined and unmachined prosthetic teeth from the mounting geometry, and/or
the at least one machined prosthetic tooth still connected to the mounting geometry is inserted into the prosthetic base after step C) and connected to the prosthetic base, before the at least one machined prosthetic tooth is separated from the mounting geometry or the machined and unmachined prosthetic teeth are separated from the mounting geometry, such that step E) proceeds after step C) and step D) after step E.

## Revendications

1. Demi-produit pour la fabrication de dents prothétiques destinées à une prothèse dentaire, où le demi-produit est constitué d'une matière plastique et le demi-produit présentant une multiplicité de dents prothétiques (1, 11, 21, 31, 41, 51) préconfectionnées et une construction géométrique de maintien, les dents prothétiques (1, 11, 21, 31, 41, 51) préconfectionnées présentant une surface coronale (3) préformée et une surface d'enveloppe (5, 6, 7) qui est contigüe de la surface coronale (3),
la construction géométrique de maintien présentant au moins une entretoise (2, 42, 52), où l'au moins une entretoise (2, 42, 52) est conçue d'un seul tenant avec au moins une des dents prothétiques (1, 11, 21, 31, 41, 51) préconfectionnées, où les dents prothétiques (1, 11, 21, 31, 41, 51) préconfectionnées peuvent être positionnées en position fixe avec la construction géométrique de maintien dans un support (8) d'un dispositif de CAM de telle sorte que les dents prothétiques (1, 11, 21, 31, 41, 51) préconfectionnées peuvent être travaillées mécaniquement avec le dispositif de CAM, où l'au moins une entretoise (2, 42, 52) de la construction géométrique de maintien est reliée sur la surface coronale (3), ou la surface d'enveloppe (5, 6, 7), ou la surface coronale (3) et la surface d'enveloppe (5, 6, 7), d'au moins une dent prothétique parmi les dents prothétiques (1, 11, 21, 31, 41, 51) préconfectionnées avec les dents prothétiques (1, 11, 21, 31, 41, 51), **caractérisé en ce qu'**aucune parmi les au moins une entretoise (2, 42, 52) de la construction géométrique de maintien est disposée sur une surface basale (4) de l'au moins une dent prothétique parmi les dents prothétiques (1, 11, 21, 31, 41, 51) préconfectionnées.

2. Demi-produit selon la revendication 1, **caractérisé en ce que**
le demi-produit est constitué d'une matière plastique de la couleur des dents avec une dureté Shore (dureté SHORE D) d'au moins 50, de manière particulièrement préférée, d'au moins 70.

3. Demi-produit selon l'une des revendications précédentes, **caractérisé en ce que** chaque dent prothétique (1, 11, 21, 31, 41, 51) parmi les dents prothétiques (1, 11, 21, 31, 41, 51) préconfectionnées est conçue d'un seul tenant avec une entretoise (2, 42, 52), ou avec deux entretoises (2, 42, 52), ou avec trois entretoises, servant d'au moins une entretoise (2, 42, 52).

4. Demi-produit selon l'une des revendications précédentes, **caractérisé en ce que** l'au moins une entretoise (2, 42, 52) de la construction géométrique de maintien sur la surface coronale (3), ou sur une surface linguale (5), ou une surface approximale (6), ou une surface vestibulaire (7), ou la surface coronale (3) et au moins une parmi la surface linguale (5), la surface vestibulaire (7), une surface distale (6) et une surface mésiale (6) d'au moins une dent prothétique parmi les dents prothétiques (1, 11, 21, 31, 41, 51) préconfectionnées est reliée avec l'au moins une dent prothétique (1, 11, 21, 31, 41, 51) parmi les dents prothétiques (1, 11, 21, 31, 41, 51) préconfectionnées.

5. Demi-produit selon l'une des revendications précédentes, **caractérisé en ce que** la construction géométrique de maintien présente, au moins par endroits, au moins un cadre (43, 44) qui comprend l'au moins une dent prothétique (1, 11, 21, 31, 41, 51) parmi les dents prothétiques (1, 11, 21, 31, 41, 51) préconfectionnées, où le cadre (43, 44) est relié avec l'au moins une dent prothétique (1, 11, 21, 31, 41, 51) parmi les dents prothétiques (1, 11, 21, 31, 41, 51) préconfectionnées par le biais d'au moins une entretoise (2, 42, 52), où, de préférence, le cadre (43, 44) est conçu d'un seul tenant avec l'au moins une entretoise (2, 42, 52) et les dents prothétiques (1, 11, 21, 31, 41, 51) préconfectionnées.

6. Demi-produit selon la revendication 5, **caractérisé en ce que**
le cadre (43, 44) entoure chaque dent prothétique (1, 11, 21, 31, 41, 51) individuelle parmi les dents prothétiques (1, 11, 21, 31, 41, 51) préconfectionnées, et/ou le cadre (43, 44) entoure ou enveloppe la surface d'enveloppe (5, 6, 7) de chaque dent prothétique (1, 11, 21, 31, 41, 51) individuelle parmi les dents prothétiques (1, 11, 21, 31, 41, 51) préconfectionnées.

7. Demi-produit selon l'une des revendications précédentes, **caractérisé en ce que** les dents prothétiques (41) préconfectionnées sont reliées ensemble par le biais de l'au moins une entretoise (42) ou les dents prothétiques (41) préconfectionnées sont reliées ensemble par le biais de l'au moins une entretoise (42) et un cadre (43, 44).

8. Demi-produit selon l'une des revendications précédentes, **caractérisé en ce que** toutes les dents prothétiques (41) parmi les dents prothétiques (41) préconfectionnées sont orientées pareillement, où des surfaces basales de toutes les dents prothétiques (41) sont accessibles à partir d'un côté du demi-produit.

9. Demi-produit selon l'une des revendications précédentes, **caractérisé en ce que** le demi-produit est fabriqué par un coulage ou une extrusion d'un moule avec une matière plastique, où, de préférence, au moins une parmi l'au moins une entretoise (2, 42, 52) est formée par un canal, notamment un canal de surmoulage, et/ou l'au moins une entretoise (2, 42, 52) possède une section transversale d'au moins 1 mm, de préférence, possède une section transversale entre 1 mm et 3 mm.

10. Procédé de fabrication d'un demi-produit selon l'une des revendications précédentes, **caractérisé par** les étapes :
de mise au point d'un moule pour le moulage du demi-produit, où le moule présente plusieurs moules de dents prothétiques servant de moules négatifs pour le moulage des dents prothétiques (1, 11, 21, 31, 41, 51) préconfectionnées et où le moule présente au moins un canal pour le surmoulage des moules de dents prothétiques ;
d'injection ou d'injection par compression d'une matière plastique liquide dans le moule, où la matière plastique s'écoule à travers l'au moins un canal dans les moules de dents prothétiques, où l'au moins un canal forme l'au moins une entretoise (2, 42, 52 ;
de durcissement de la matière plastique dans le moule ; et
de démoulage de la matière plastique durcie.

11. Procédé selon la revendication 10, **caractérisé en ce que**
les moules des dents prothétiques sont reliés ensemble par respectivement au moins un parmi l'au moins un canal, ou
les moules de dents prothétiques sont reliées ensemble par le biais respectivement de l'au moins un canal et par le biais d'un moule de cadre du moule, et/ou
le moule est composé de deux ou plusieurs parties, où chacun parmi l'au moins un canal est formé par deux parties du moule.

12. Procédé de fabrication d'une prothèse dentaire avec un procédé de CAM, présentant les étapes :
(A) mise au point d'un demi-produit selon l'une des revendications 1 à 9, ou fabrication d'un tel demi-produit avec un procédé de fabrication selon l'une des revendications 10 ou 11 ;
(B) fixation du demi-produit dans un dispositif de CAM ;
(C) ensuite, façonnage soustractif, en particulier, raccourcissement d'au moins une dent prothétique (1, 11, 21, 31, 41, 51) parmi les dents prothétiques (1, 11, 21, 31, 41, 51) préconfectionnées avec un dispositif de CAM d'après un modèle virtuel individuel ;
(D) séparation de l'au moins une dent prothétique façonnée de la construction géométrique de maintien par séparation ou cassure de l'au moins une entretoise (2, 42, 52), en particulier sur une surface de l'au moins une dent prothétique façonnée ; et
(E) implantation et liaison de l'au moins une dent prothétique façonnée avec une base de prothèse pour la fabrication de la prothèse dentaire.

13. Procédé selon la revendication 12, **caractérisé en ce que**
l'au moins une dent prothétique (1, 11, 21,31, 41, 51) parmi les dents prothétiques (1, 11, 21, 31, 41, 51) préconfectionnées est raccourcie à la base dans l'étape (C) selon le modèle virtuel individuel.

14. Procédé selon la revendication 12 ou la revendication 13, **caractérisé en ce que**
dans l'étape (D), un cadre (43, 44) du demi-produit, et/ou des parties de l'au moins une entretoise (2, 42, 52), restent reliés avec le dispositif de CAM pendant que l'au moins une dent prothétique façonnée est détachée ou que les dents prothétiques façonnées ou non façonnées sont détachées.

15. Procédé selon l'une des revendications 12 à 14, **caractérisé en ce**
**qu'**après l'étape (C), la construction géométrique de maintien, en particulier, l'au moins une entretoise (2, 42, 52), est fraisée, de sorte qu'un point de rupture souhaité est créé, où le point de rupture souhaité se produit dans l'étape D), qui a lieu après l'étape C), pour la séparation de l'au moins une dent prothétique façonnée de la construction géométrique de maintien ou des dents prothétiques façonnées et non façonnés, est utilisé par la construction géométrique de maintien , et/ou
l'au moins une dent prothétique façonnée encore reliée avec la construction géométrique de maintien est implantée dans la base de prothèse après l'étape C) et est reliée avec la base de prothèse avant que l'au moins une dent prothétique façonnée ne soit séparée de la construction géométrique de maintien ou les dents prothétiques façonnées ou non façonnées ne soient séparées de la construction géométrique de maintien, de sorte que l'étape E) a lieu après l'étape C) et l'étape D) a lieu après l'étape E).
